# EUROPÄISCHE PATENTSCHRIFT

(11) **EP 2 027 490 B1**
(45) Veröffentlichungstag und Bekanntmachung des Hinweises auf die Patenterteilung: **23.05.2012**
(21) Anmeldenummer: 07722421.0
(22) Anmeldetag: 11.05.2007
(51) Int. Cl.: G01T 1/161, G01T 1/164

(54) **ANORDNUNG MIT EINER MEDIZINISCHEN GAMMASONDE, OPTISCHES MODUL UND BAUSATZ**
ARRANGEMENT WITH A MEDICAL GAMMA DETECTOR, OPTICAL MODULE AND KIT
SYSTÈME POURVU D'UNE SONDE GAMMA MÉDICALE, MODULE OPTIQUE ET ENSEMBLE CORRESPONDANT

(30) Priorität: 16.05.2006 DE 102006023080
(43) Veröffentlichungstag der Anmeldung: 25.02.2009
(73) Patentinhaber: First Sensor AG, 12459 Berlin (DE)
(72) Erfinder: BAERWOLF, Hartmut, 51643 Gummersbach (DE); GOEBEL, Thomas, 12683 Berlin (DE); HUG, Olaf, 14055 Berlin (DE)
(74) Vertreter: Bittner, Thomas L.
(86) Internationale Anmeldenummer: PCT/DE2007/000873
(87) Internationale Veröffentlichungsnummer: WO 2007/131485

(56) Entgegenhaltungen:
- EP-A- 0 999 457
- US-A- 5 088 492
- US-B1- 6 643 538

## Beschreibung

Die Erfindung bezieht sich auf eine Anordnung mit einer medizinischen Gammasonde und einen Bausatz mit einer medizinischen Gammasonde und einem optischen Modul.

### Hintergrund der Erfindung

Das radioaktive Markieren des ersten dränierenden Lymphknoten, (Wächterlymphknoten oder Sentinel Node), bei einer Operation (OP) des malignen Melanoms (Hautkrebs) und des Mamakarzinioms (Brustkrebs) sowie einiger Krebsarten im Hals- und Bauchbereich hat sich in der medizinischen Praxis bereits zu einer Standardmethode entwickelt. Darüber hinaus gewinnt die Anwendung radioaktiv markierter, tumorspezifischer Pharmaka wegen der zu erwartenden hohen Ortauflösung bei der direkten Lokalisation tumorösen Gewebes zunehmend an Bedeutung. Von den technischen Eigenschaften und der Handhabung der zur Lokalisation der radioaktiv markierten Gewebebereiche verwendeten Gammasonden hängt sowohl die Qualität als auch die Dauer der Lymphknoten- oder Tumorsuche ganz wesentlich ab.

Das Auffinden radioaktiv markierter Lymphknoten mit Hilfe von bekannten Gammasonden findet üblicherweise durch eine ortsauflösende Aktivitätsmessung statt. Hierbei erfolgt im Bereich des Aktivitätsmaximums die örtliche Zuordnung und damit letztlich das Auffinden des Lymphknotens durch eine gedachte Projektion der Sondenmitte in den Gewebebereich. Dies führt in Abhängigkeit vom Sondendurchmesser und der Erfahrung des Arztes im Umgang mit einem konkreten Sondentyp zu subjektiven Messfehlern, die das Auffinden des Knotens erschweren, zeitlich verzögern oder im Extremfall auch verhindern können. Eine direkte Anzeige des gesuchten Gewebeabschnittes erfolgt nicht.

Das Dokument US 5,008,492 offenbart ein Endoskop, welches zur Erfassung von radioaktiver Strahlung eingesetzt wird.

Das Dokument EP 0 999 457 A1 offenbart ein medizinisches Gerät zum Messen der Strahlung von radiopharmazeutischen Mittel.

Das Dokument US 6,643,538 beschreibt eine interoperative chirurgische Sonde.

### Zusammenfassung der Erfindung

Aufgabe der Erfindung ist es, verbesserte Technologien für eine medizinische Gammasonde bereitzustellen, mit denen der Bedienkomfort für den Nutzer der medizinischen Gammasonde erhöht ist. Nachteile der bisherigen Gammasondentechnik sollen vermieden sein.

Die Aufgabe wird gelöst durch eine Anordnung mit einer medizinischen Gammasonde und einem an der medizinischen Gammasonde angeordneten, optischen Modul nach dem unabhängigen Anspruch 1 sowie einen Bausatz mit einer medizinischen Gammasonde und einem an der medizinischen Gammasonde detektionsseitig montierbaren, optischen Modul nach dem unabhängigen Anspruch 9. Vorteilhafte Ausgestaltungen der Erfindung sind Gegenstand von abhängigen Ansprüchen.

Die Lichtquellen-Steuereinrichtung kann so konfiguriert sein, dass die Lichtstärke der von der Lichtquelle abgegebenen Lichtstrahlen proportional zu der detektierten Aktivität eingestellt wird, wobei selbstverständlich ein geeigneter Proportionalitätsfaktor berücksichtigt werden kann.

Eine bevorzugte Weiterbildung der Erfindung sieht vor, dass das optische Modul lösbar an der medizinischen Gammasonde montiert ist. Die Lösbarkeit des optischen Moduls kann zum Beispiel mit einer Steckverbindung oder einer Schraubverbindung ausgeführt sein.

Bei einer zweckmäßigen Ausgestaltung der Erfindung kann vorgesehen sein, dass das optische Modul in ein Gehäuse der medizinischen Gammasonde integriert ist. Auf diese Weise kann ein einheitliches Gehäuse geschaffen werden. Auch in dieser Ausgestaltung ist eine lösbare Montage des optischen Moduls möglich, zum Beispiel mittels eines abnehmbaren oder zu öffnenden Gehäuseabschnittes, welcher das Abnehmen oder Anbringen des optischen Moduls erlaubt. Insbesondere kann ein Gehäuseabschnitt schwenkbar ausgeführt sein.

Eine vorteilhafte Ausführungsform der Erfindung sieht vor, dass die Lichtquelle in einem mittleren Bereich eines Kollimators angeordnet ist. Hierdurch wird der Aufwand für eine mittige Führung der von der Lichtquelle erzeugten Lichtstrahlen vermindert, da die Lichtquelle selbst bereits im mittleren Bereich des Kollimators positioniert ist. Besonders einfach wird bei dieser Ausführungsform eine konzentrische Verteilung der Lichtstrahlen um den mittleren Bereich des Kollimators ermöglicht.

Bevorzugt sieht eine Fortbildung der Erfindung vor, dass das optische Modul in einem auf die medizinische Gammasonde aufgesetzten Zusatzkollimator gebildet ist. Der Zusatzkollimator kann auf ein detektionsseitiges Ende der medizinischen Gammasonde aufgesteckt oder aufgeschraubt sein. Aber auch andere Arten einer Befestigung des Zusatzkollimators an der medizinischen Gammasonde können vorgesehen sein, insbesondere auch zum Nachrüsten des Zusatzkollimators.

Bei einer vorteilhaften Ausgestaltung der Erfindung kann vorgesehen sein, dass das optische Modul ein oder mehrere optische Elemente umfasst, die konfiguriert sind, die Lichtstrahlen zu leiten und wahlweise zu verändern. Eine Veränderung der Lichtstrahlen kann insbesondere auch eine Fokussierung der Lichtstrahlen oder auch ein Streuen dieser oder eine Kombination hiervon umfassen.

Eine Weiterbildung der Erfindung kann vorsehen, dass das eine oder die mehreren optischen Elemente konfiguriert sind, die Lichtstrahlen im wesentlichen kollinear zur Längsachse einer Gammasondenspitze der medizinischen Gammasonde zu führen. In der Regel sind medizinische Gammasonden so ausgeführt, dass eine bevorzugte Detektionsrichtung im Wesentlichen kollinear zur Längserstreckung der Sonde gebildet ist.

Bei einer zweckmäßigen Ausgestaltung der Erfindung kann vorgesehen sein, dass die Lichtquelle mit einer oder mehreren lichtemittierenden Dioden oder einer oder mehrerer Laserdioden gebildet ist. Auch eine Kombination vom lichtemittierenden Dioden (LED) und Laserdioden kann vorgesehen sein. Die Dioden weisen bevorzugt eine fokussierte Abstrahlung, einen großen Quantenwirkungsgrad und / oder eine lange Lebensdauer auf. In einer möglichen Ausgestaltung ist eine Anpassung an die spektrale Empfindlichkeitskurve des menschlichen Auges vorgesehen, indem eine Lichtquelle verwendet wird, die Licht in einen Spektralbereich erzeugt, in welchem das menschliche Auge besonders empfindlich ist, insbesondere grünes Licht.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: eine schematische Darstellung eines kopfseitigen Abschnittes einer medizinischen Gammasonde mit einem hierin gebildeten optischen Modul und
- Fig. 2: eine schematische Darstellung eines kopfseitigen Abschnittes einer medizinischen Gammasonde, auf welches ein optisches Modul aufgesetzt ist.

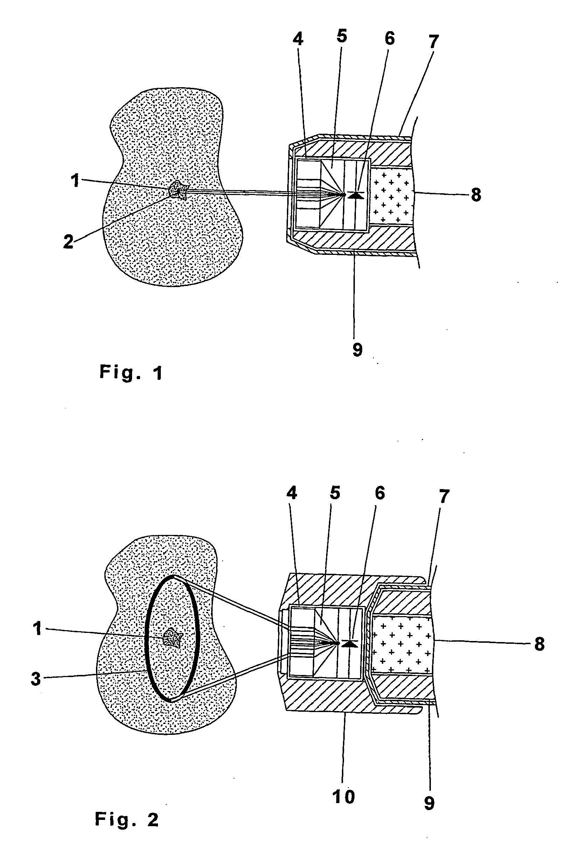

Fig. 1 zeigt eine schematische Darstellung eines kopfseitigen oder detektionsseitigen Abschnittes 20 einer medizinischen Gammasonde mit einem hierin gebildeten optischen Modul 4, was auch als optisches Lichtzeigermodul bezeichnet werden kann, so dass eine lichtstrahlunterstützte Gammasonde geschaffen ist. Die medizinische Gammasonde ihrerseits kann grundsätzlich von beliebiger Ausführung sein.

Mit dem optischen Modul 4 ist das Erzeugen eines optischen Zeigers ermöglicht. Zu diesem Zweck verfügt das optische Modul 4 über eine oder mehrere Lichtquellen 6 und zugehörige optische Elemente 5, um von der Lichtquelle 6 erzeugte Lichtstrahlen zu leiten und wahlweise zu beeinflussen, beispielsweise zu fokussieren. Als Lichtquelle 6 können insbesondere eine leuchtstarke lichtemittierende Diode oder eine Laserdiode vorgesehen sein. Mit dem optischen Zeiger wird eine direkte Anzeige eines Gewebeabschnittes 1, welcher radioaktiv markiert ist, ermöglicht. Während der Aktivitätsmessung mit der medizinischen Gammasonde kann der Gewebebereich 1 mit der maximalen Aktivität direkt lichtoptisch markiert werden.

Das optische Modul 4 ist im Bereich eines Sondenkopfes 21 angeordnet, der seinerseits einen Kollimator 9 und einen Szintillationsdetektor 8 aufweist. Bei der Ausführungsform nach Fig. 1 ist das optische Modul 4 fest an einem Gehäuse 7 der medizinischen Gammasonde 20 montiert. Dieses kann außen an dem Gehäuse 7 erfolgen oder, wie dies Fig. 1 zeigt, mittels Integration in den Kollimator 9 erfolgen. Die Lichtquelle 6 ist im mittleren Bereich des Kollimators 9 angeordnet. Die von der Lichtquelle 6 erzeugten Lichtstrahlen bilden einen markierenden Lichtspot 2 im Zentrum der höchsten Aktivität auf dem Gewebeabschnitt 1, wodurch dem Benutzer ein Gewebeentnahmepunkt direkt und exakt angezeigt wird.

Die Form des Lichtspots 2 wird durch das zugehörige optische Element 5 bestimmt und ist vorzugsweise ein Kreuz, ein Kreis (vgl. Fig. 2), ein Punkt oder eine Kombination dieser oder anderer Geometrien. Mit Hilfe eines kreisförmigen Lichtspot kann zusätzlich ein abstandsabhängiger und ebenfalls kreisförmiger Empfindlichkeitsbereich eines Messfensters der medizinischen Gammasonde auf den Gewebeabschnitt projiziert werden, so dass ein gesamter Gewebebereich gekennzeichnet wird, der zu einem aktuellen Messwert der medizinischen Gammasonde beiträgt.

Es kann vorgesehen sein, die ausgesendete Lichstärke der Lichtquelle 6 mit einer gemessenen Aktivität der medizinischen Gammasonde zu synchronisieren. Hierzu werden die in de medizinischen Gammasonde zur Verfügung stehenden, elektronische Informationen über die gemessene Aktivität des Gewebeabschnittes 1 ausgewertet und hiervon ausgehend zugeordnete Steuersignale an eine Lichtquellen-Steuereinrichtung gegeben. Eine hierzu geeignete elektronische Schaltung kann ergänzend zu der üblichen Steuerung der medizinischen Gammasonde ohne weiteres integriert werden. Der Lichtspot 2 kennzeichnet dann mit maximaler Intensität die Position eines Punktes in dem Gewebeabschnittes 1 mit maximaler Aktivität. Die lichtoptische Anzeige der maximalen gemessenen Aktivität der medizinischen Gammasonde kann durch die maximale Lichtstärke der Lichtquelle 6, durch die maximale Pulsfrequenz des Lichtspots 2, einen Farbumschlag oder eine Kombination hiervon zusätzlich unterstützt werden.

Der Lichtspot 2 kann aber auch unabhängig von der gemessenen Aktivität der medizinischen Gammasonde die Position eines Messbereiches im Gewebeabschnitt 1 kontinuierlich oder in gepulster Form direkt anzeigen.

Fig. 2 zeigt eine schematische Darstellung eines kopfseitigen Abschnittes 20 einer medizinischen Gammasonde, auf welches das optische Modul 4 aufgesetzt ist. Für gleiche Merkmale werden in Fig. 2 dieselben Bezugszeichen wie in Fig. 1 verwendet. Im Unterschied zu Fig. 1 ist ein kreisförmiger Lichtspot 3 gezeigt. Das optische Modul 4 ist als Ergänzungsbaukomponente gebildet, die auch zur Nachrüstung geeignet ist und die in dem dargestelltem Ausführungsbeispiel in einen aufsetzbaren Zusatzkollimator 10 integriert ist. Auch eine eigenständige Ausführung des optischen Moduls 4 kann vorgesehen sein, so dass dieses lösbar montiert werden kann, zum Beispiel mittels Stecken oder Schrauben.

## Patentansprüche

1. Anordnung mit einer medizinischen Gammasonde und einem an der medizinischen Gammasonde angeordneten, optischen Modul (4), welches eine im Betrieb Lichtstrahlen abgebende Lichtquelle (6) aufweist und konfiguriert ist, in einem Detektionsbereich (1) der medizinischen Gammasonde unter Nutzung der Lichtstrahlen der Lichtquelle (6) einen optischen Zeiger zu erzeugen, **gekennzeichnet durch** eine Lichtquellen-Steuereinrichtung, die konfiguriert ist, eine Lichtstärke der von der Lichtquelle (6) abgegebenen Lichtstrahlen gemäß einer von der medizinischen Gammasonde detektierten Aktivität zu modulieren.

2. Anordnung nach Anspruch 1, **dadurch gekennzeichnet, dass** das optische Modul (4) lösbar an der medizinischen Gammasonde montiert ist.

3. Anordnung nach Anspruch 1 oder 2, **dadurch gekennzeichnet, dass** das optische Modul (4) in ein Gehäuse (7) der medizinischen Gammasonde integriert ist.

4. Anordnung nach einem der vorangehenden Ansprüche, **dadurch gekennzeichnet, dass** die Lichtquelle (6) in einem mittleren Bereich eines Kollimators (9; 10) angeordnet ist.

5. Anordnung nach einem der vorangehenden Ansprüche, **dadurch gekennzeichnet, dass** das optische Modul (4) in einem auf die medizinische Gammasonde aufgesetzten Zusatzkollimator (10) gebildet ist.

6. Anordnung nach einem der vorangehenden Ansprüche, **dadurch gekennzeichnet, dass** das optische Modul (4) ein oder mehrere optische Elemente (5) umfasst, die konfiguriert sind, die Lichtstrahlen zu leiten und wahlweise zu verändern.

7. Anordnung nach Anspruch 6, **dadurch gekennzeichnet, dass** das eine oder die mehreren optischen Elemente (5) konfiguriert sind, die Lichtstrahlen im wesentlichen kollinear zur Längsachse einer Gammasondenspitze der medizinischen Gammasonde zu führen.

8. Anordnung nach einem der vorangehenden Ansprüche, **dadurch gekennzeichnet, dass** die Lichtquelle (6) mit einer oder mehreren lichtemittierenden Dioden oder einer oder mehrerer Laserdioden gebildet ist.

9. Bausatz mit einer medizinischen Gammasonde und einem an der medizinische Gammasonde detektionsseitig montierbaren, optischen Modul (4), welches eine im Betrieb Lichtstrahlen abgebende Lichtquelle (6) aufweist und konfiguriert ist, in einem Detektionsbereich (1) der medizinischen Gammasonde unter Nutzung der Lichtstrahlen der Lichtquelle (6) einen optischen Zeiger bereitzustellen, **gekennzeichnet durch** eine Lichtquellen-Steuereinrichtung, die konfiguriert ist, eine Lichtstärke der von der Lichtquelle (6) abgegebenen Lichtstrahlen gemäß einer von der medizinischen Gammasonde detektierten Aktivität zu modulieren.

## Claims

1. Arrangement with a medical gamma probe and an optical module (4) arranged on the medical gamma probe, said optical module having a light source (6) which emits light rays during operation and is configured to generate an optical pointer in a detection region (1) of the medial gamma probe using the light rays from the light source (6), **characterised in that** a light source control device which is configured to modulate a light intensity of the light rays emitted by the light source (6) according to an activity detected by the medical gamma probe.

2. Arrangement according to claim 1, **characterized in that** the optical module (4) is detachably mounted on the medical gamma probe.

3. Arrangement according to claim 1 or 2, **characterized in that** the optical module (4) is integrated in a housing (7) of the medical gamma probe.

4. Arrangement according to any one of the preceding claims, **characterized in that** the light source (6) is arranged in a central region of a collimator (9; 10).

5. Arrangement according to any one of the preceding claims, **characterized in that** the optical module (4) is constructed in an additional collimator (10) placed on the medical gamma probe.

6. Arrangement according to any one of the preceding claims, **characterized in that** the optical module (4) comprises one or more optical elements (5) which are configured to guide and, optionally to change the light rays.

7. Arrangement according to claim 6, **characterized in that** the one or more optical elements (5) are configured to guide the light rays essentially collinear with the longitudinal axis of a gamma probe tip of the medical gamma probe.

8. Arrangement according to any one of the preceding claims, **characterized in that** the light source (6) is constructed with one or more light emitting diodes or one or more laser diodes.

9. Construction kit comprising a medical gamma probe and an optical module (4) capable of detector-side mounting on the medical gamma probe, said optical module having a light source (6) which emits light rays in operation and is configured to provide an optical pointer in a detection region (1) of the medical gamma probe using the light rays from the light source (6), **characterised in that** a light source control device which is configured to modulate a light intensity of the light rays emitted by the light source (6) according to an activity detected by the medical gamma probe.

## Revendications

1. Ensemble comprenant une sonde gamma médicale et un module optique (4) disposé sur la sonde gamma médicale, ledit module présentant une source de lumière (6) émettant des rayons lumineux en cours de fonctionnement et configuré pour générer un pointeur optique dans une plage de détection (1) de la sonde gamma médicale en utilisant les rayons lumineux de la source de lumière (6), **caractérisé par** un dispositif de commande de source de lumière, configuré pour moduler une intensité de lumière des rayons lumineux émis par la source de lumière (6) selon une activité détectée par la sonde gamma médicale.

2. Ensemble selon la revendication 1, **caractérisé en ce que** le module optique (4) est monté de manière amovible sur la sonde gamma médicale.

3. Ensemble selon la revendication 1 ou 2, **caractérisé en ce que** le module optique (4) est intégré dans un boîtier (7) de la sonde gamma médicale.

4. Ensemble selon l'une quelconque des revendications précédentes, **caractérisé en ce que** la source de lumière (6) est disposée dans une partie centrale d'un collimateur (9 ; 10).

5. Ensemble selon l'une quelconque des revendications précédentes, **caractérisé en ce que** le module optique (4) est formé dans un collimateur supplémentaire (10) placé sur la sonde gamma médicale.

6. Ensemble selon l'une quelconque des revendications précédentes, **caractérisé en ce que** le module optique (4) comprend un ou plusieurs éléments optiques (5) qui sont configurés pour guider les rayons lumineux ou les modifier de manière sélective.

7. Ensemble selon la revendication 6, **caractérisé en ce que** ledit un ou lesdits plusieurs éléments optiques (5) est/sont configuré(s) pour guider les rayons lumineux de manière substantiellement colinéaire par rapport à l'axe longitudinal d'une tête de sonde gamma de la sonde gamma médicale.

8. Ensemble selon l'une quelconque des revendications précédentes, **caractérisé en ce que** la source de lumière (6) est formée par une ou plusieurs diodes électroluminescentes ou une ou plusieurs diodes laser.

9. Kit, comprenant une sonde gamma médicale et un module optique (4) à monter sur la sonde gamma médicale côté détection, ledit module présentant une source de lumière (6) émettant des rayons lumineux en cours de fonctionnement et configuré pour générer un pointeur optique dans une plage de détection (1) de la sonde gamma médicale en utilisant les rayons lumineux de la source de lumière (6), **caractérisé par** un dispositif de commande de source de lumière, configuré pour moduler une intensité de lumière des rayons lumineux émis par la source de lumière (6) selon une activité détectée par la sonde gamma médicale.
